# EUROPEAN PATENT APPLICATION

(11) **EP 0 585 471 A1**
(43) Date of publication of application: **09.03.1994**
(21) Application number: 93906795.5
(22) Date of filing: 19.03.1993
(51) Int. Cl.: B23Q 3/157, B23Q 3/155

(54) **TOOL HOLDER GRIPPER**

(30) Priority: 19.03.1992 JP 63030/92
(71) Applicant: FANUC LTD., Minamitsuru-gun, Yamanashi 401-05 (JP)
(72) Inventor: SATO, Naoki, Fanuc Dai-3 Vira-karamatsu, Minamitsuru-gun, Yamanashi 401-05 (JP); FUJIMOTO, Akihiko, Fanuc Mansion Harimomi 6-109, Minamitsuru-gun, Yamanashi 401-05 (JP)
(74) Representative: Otte, Peter, Dipl.-Ing.
(86) International application number: JP9300328
(87) International publication number: WO9318884

(57) **Abstract**

A tool holder gripper for removably gripping a tool holder having a tool of a machine tool fitted thereto comprises a substantially flat sheet-like holder base (1), a pair of arm members (4) and a pair of rolling members (7) each rotatably fitted to the tip of each arm member (4), the members (4) and (7) being provided on both side surfaces of the holder base (1), and urging means (8) disposed at the rear part of the holder base (1). The pair of rolling members (7) are urged toward each other by the urging means (8) via the arm members (4) and removably grip the tool holder (15) between the pair of rolling members (7).

## Description

### Technical Field

The invention relates to a device for gripping a tool holder. In particular, the invention relates to a device for gripping a tool holder which device cooperates with a tool magazine of an automatic machine tool, such as a machining center, provided with an automatic tool changer (in the following referred to as an ATC). Through manual operation, the device detachably grips a tool holder holding a tool such as a cutter tool. Furthermore, the device can smoothly mount the tool holder holding the tool, selected by the indexing the tool magazine based on a requirement, to a spindle of the machining center through the movement of the machining center, and can also return the tool holder from the spindle to the tool magazine.

### Background Art

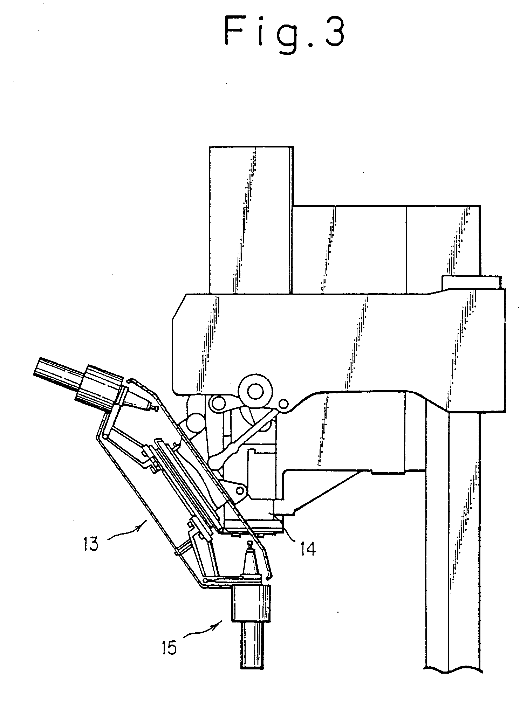

Recently, in the field of machine tools, a machine tool with the ATC, in particular a machining center, has been widely used. A typical machining center comprises, as shown in Figure 3, a tool magazine 13 which has a plurality of devices for gripping tool holders. The devices are equally spaced around the tool magazine. Tools used for machining process are held by the respective tool holders and accommodated within the tool magazine 13.

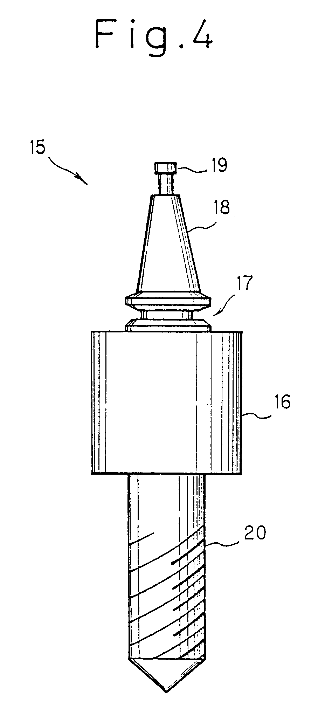

The tool 20 used with a machining center, as shown in Figure 4, is fitted into the tool holder 15 from the end of the holder and held by the tool holder 15. The tool holder 15 comprises a holder head 16 holding the tool 20, a V-shaped groove 17 adapted to engage with a gripping portion of the device and to be gripped by the device for gripping a tool, a tapered shank 18 adapted to be complementarily fitted into a tapered bore of a spindle 14, and a pull stud 19 for lifting the tapered shank 18 into the spindle.

The desired tools are selected, based on a machining program, prior to the machining process. Then, the selected tools are mounted into the respective tool holders 15 by the operator. The tool holders 15 are manually mounted onto the devices for gripping a tool holder with the V-shaped groove of each holder engaged with the gripping portion of each device. During the machining process, in order to use the predetermined tools according to the machining program, the tools will be automatically moved between the spindle and the tool magazine as described below. Firstly, the device approaches the spindle 14 of the machining center by the swing movement of the tool magazine 13, then the device engages with the V-shaped groove 17 of the tool holder mounted onto the spindle and grips the tool holder 15. Next, the tool holder 15 is withdrawn from the spindle 14 when the spindle 14 rises. Thus, the the tool, which has finished its work, is returned to its normal position. Then, a required tool 20 is selected by the indexing the magazine 13. The tool holder 15 holding the tool 20 is moved, until it is directly below the spindle 14, by the the magazine 13 swinging. The tapered shank 18 of the tool holder 15 is fitted into the bore of the spindle 14 when the spindle 14 is lowered. This terminates the tool change.

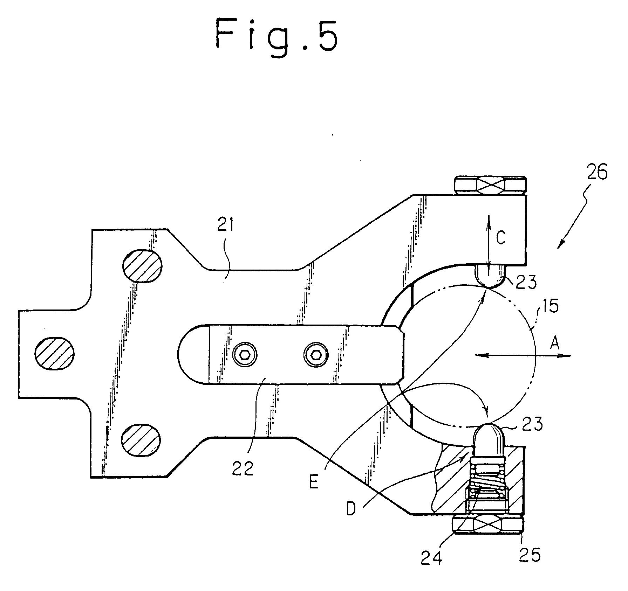

Figure 5 illustrates a device for gripping a tool holder of the prior art.

The device comprises a generally flat grip 21 having a generally U-shaped gripping portion 26 on one end thereof. A bore is made at each end portion of a pair of branched portions of the gripping portion 26 of the grip 21. A pair of fingers 23 and a pair of springs 24 are inserted into the bores. The fingers 23 and the springs 24 are secured from the rear side by caps 25. Thus, the pair of fingers 23 are biased in the opposite directions to each other, that is, in the directions toward the V-shaped groove, not shown, of the tool holder 15 illustrated by the dotted line. Such construction allows the fingers 23, when the tool holder 15 is manually mounted or removed, to move in the direction indicated by an arrow C with the tips of the fingers engaging with the V-shaped groove, whereby the tool holder 15 can move in the direction indicated by an arrow A. Once the tool holder 15 is forced into the gripping position with its key groove fitted to the position key 22 of the tool holder, the pair of fingers 23 approach each other, due to the biasing effect of the springs 24, and grip the tool holder 15 at the V-shaped groove 17.

### Disclosure of the Invention

The tool holder of the prior art described above is widely used because the construction is relatively simple. However, the tool holder has the disadvantages described below.

The conventional tool holder has limited space for the fingers and the springs, which may be seen from Figure 5. Therefore, the dimensions of these components are also limited, thus it is difficult to ensure the sufficient grip force to grip the tool and the tool holder which have considerable weight. This leads to the malfunctions, such as dropping of the tool during the tool change or during the indexing of the tool magazine 13, and the reliability of the tool change function of the machining center is reduced.

Furthermore, in the conventional device for gripping a tool holder, when the tool holder is mounted, the fingers 23 are forced by the movement of the tool holder in the direction indicated by the arrow A, against the bores at positions "D", by the tool holder to be mounted, and at the same time, the fingers 23 are moved in the direction indicated by the arrow C. Therefore, at the positions D, the fingers 23 and the bores of the grip 21 tends to be worn. Additionally, portions E of the fingers 23 which contact to the tool holder 15 are also worn by the friction therebetween. Such wear reduces the life time of the device and lowers the reliability of the machining center.

The object of the invention is to provide a device for gripping a tool holder which can apply a high gripping force, as compared with the conventional device, while the device of the invention makes the mounting and the releasing operation easier. Additionally, the object of the invention is to provide a device for gripping a tool holder which is adapted to reduce the friction between the device and the tool holder to be mounted during the mounting and the releasing operation, whereby the wear at the contact portions therebetween is reduced.

In accordance with the characteristics of the invention, a device for detachably gripping a tool holder holding a tool comprises:
a generally flat holder base means;
two arms, each extending at each side of the holder base means in the longitudinal direction along the side of the holder base means and attached for rotation about pivot pins arranged perpendicular to the plane of the holder base means;
a pair of rolling means attached to the leading end of the each arms for rotation, the rolling means arranged so as to engage with a groove provided in the tool holder and to grip it;
a spring means positioned at the rear portion of the holder base, the spring means biasing the arms so that the leading end of the respective arms approach each other; and
the tool holder being gripped by the leading end of the holder base means and the pair of rolling means.

In the preferred embodiment of the invention, the spring means are clamped between a pair of first heads provided at the rear end of the respective arms and a pair of second heads provided at a rear portions in the holder base means facing the respective first heads.

Furthermore, the spring means may be a pair of coil springs.

In accordance with another embodiment of the invention, the spring means is a single coil spring inserted into a through hole provided at a rear portion of the holder base means and the coil spring biases the rear end of the each arm away from the other.

In accordance with the further preferred embodiment of the invention, the pair of rolling means are rollers which are attached to a pair of pins for rotation, and the pair of pins are fitted into a pair of bores provided at the leading end of the respective arms.

In accordance with the further preferred embodiment of the invention, the holder base means is provided an attachment means and is secured to a tool magazine of an automatic tool changer by the attachment means.

The attachment means is preferably formed into one piece with the holder base means.

### Brief Description of the Drawings

In the following detailed description of the invention, reference is made to the drawings, in which:
Figure 1A is a plan view, along an arrow I in Figure 2, of the preferred embodiment of a device for gripping a tool holder in accordance with the invention.
Figure 1B is a partial view of another embodiment of an attachment for an spring means in the holder base of Figure 1A.
Figure 2 is a side elevation, along an arrow II in Figure 1A, of a device for gripping a tool holder in accordance with the invention.
Figure 3 is a schematic side elevation of a machining center.
Figure 4 is a schematic side elevation of a tool holder used in a machining center.
Figure 5 a plan view of a conventional device for gripping a tool holder.

### Best Mode for Carrying Out the Invention

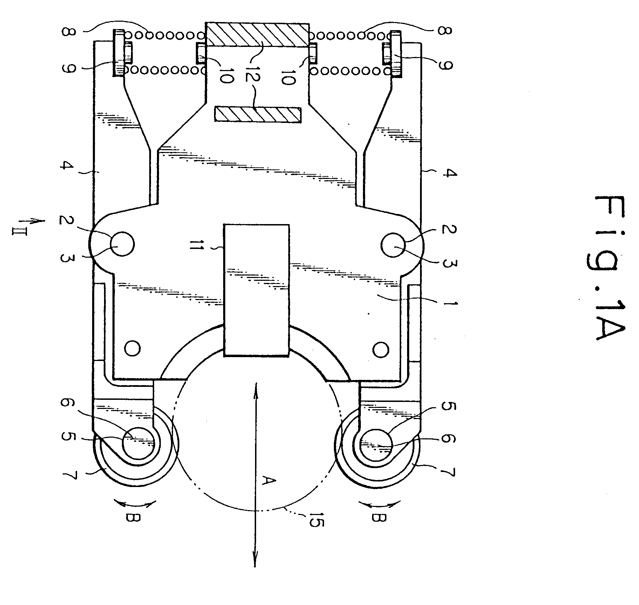

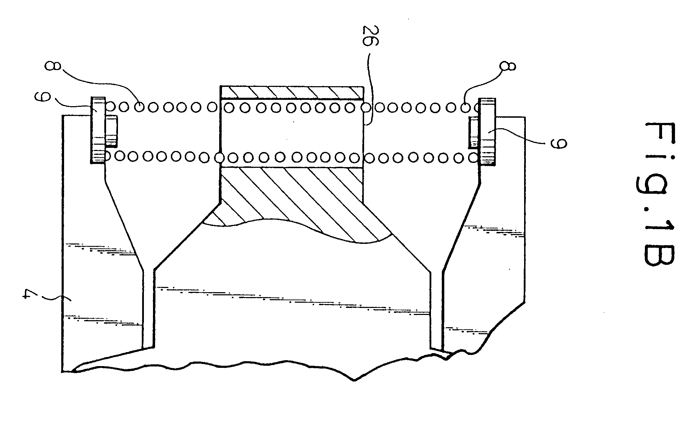

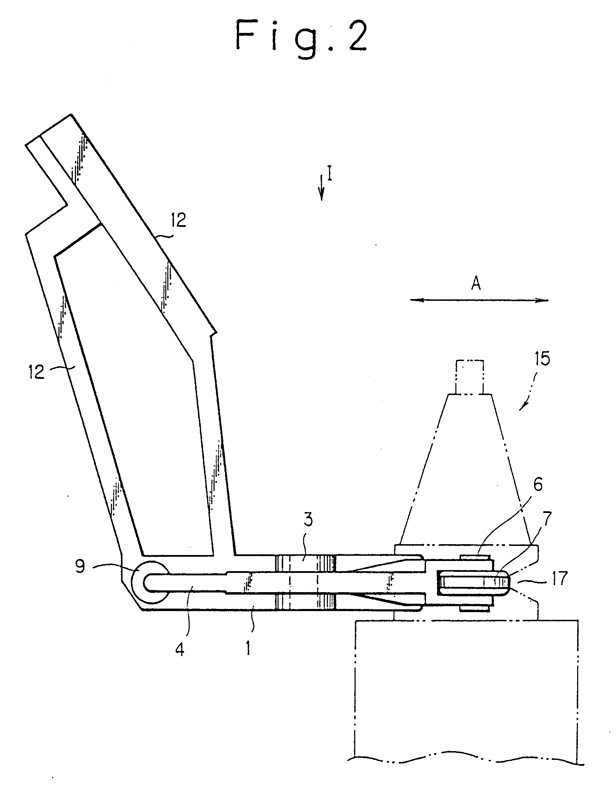

Referring Figure 1A and 2, a device for gripping a tool holder of the invention has a generally U-shaped gripping portion for gripping a tool holder similar to the prior art. A tool holder 15, illustrated by dotted line, is manually detachably mounted onto the gripping portion in the direction indicated by an arrow A. That is, the device in accordance with the invention comprises a generally flat holder base 1 having a position key 11, and the tool holder 15 is mounted onto the device so that its center axis is substantially perpendicular to the plane of the holder base 1 with a key groove (not shown but formed at a V-shaped groove 17) fitted to the key 11.

The holder base 1 comprises an attachment member 12 for mounting the device to a tool magazine 13. The device is secured, as shown in Figure 3, to a turret base in the tool magazine 13 by the attachment member 12 in a known manner. The attachment member 12 is molded in one piece with the holder base 1 so that when a tool is selected by the magazine 13 and the tool and the tool holder 15 is moved to directly below the spindle of the machining center, the center axis of the tool and the tool holder 15 is aligned with the center axis of the spindle.

The holder base 1 is provided with a pair of bores 2 which are symmetrically positioned at the either side of the holder base, and are substantially perpendicular to the plane of the holder base 1. Pins 3 are fitted into the respective bores 2 in a known manner. A pair of arms 4 are extended along the longitudinal direction of the holder base 1 and are pivotary mounted about the respective pins 3 at the either side of the holder base 1. The pair of the arms 4 are mounted by the pins 3 in a known manner. For example, each arm 4 may be provided with a bore, not shown, for the pin 3, and be mounted to the pin 3 fitted into the bore. Additionally, sleeves may be advantageously fitted into the respective bores in order to reduce the friction between the pins 3 and the arms 4.

A pair of rolling elements 7 are secured for rotation at the end of the respective arms 4 where the tool holder is mounted (right-hand side of Figure 1). The rolling elements 7 function to engage with the V-shaped groove 17 of the tool holder 15 and to grip the tool holder 15. In the preferred embodiment, the pair of rolling elements 7 are formed into roller members chamfered along their peripheries so as to correspond to the configuration of the V-shaped groove 17. However, depending on the shape of the groove 17 of the tool holder 15, the rolling elements 7 may be spherical members, not shown, or elongated cylindrical roller members, not shown, longer than the rolling elements 7 illustrated. The roller members 7 are secured for rotation about a pair of pins 6 which, in a known manner, are fitted into a pair of bores 5 provided at the end of the respective arms 4. Additionally, sleeves may be advantageously used in order to reduce the friction between the roller members 7 and the pins 6.

The arms 4 are provided with a pair of first heads 9 respectively at the end opposite to the roller members 7 in order to seat a pair of spring means 8. The holder base 1 is provided with a pair of second heads 10 at positions facing the respective first heads 9 in the either sides thereof in order to seat the spring means 8. The pair of spring means 8 are positioned and clamped between the respective first and second heads 9 and 10. The spring means 8 bias the arms 4 so that the pair of roller members 7 approach each other, whereby the roller members 7 engage and grip the tool holder 15. In the preferred embodiment, the first heads 9 are molded in one piece with the arms 4 by a known molding method, such as lost wax method, so as to clamp the spring means 8 securely in cooperation with the respective second heads 10. Furthermore, the pair of second heads 10 slightly project from the side faces of the holder base 1 in Figure 1. However, the projecting second heads 10 may be replaced by recessed heads, not shown, positioned to face the respective first heads 9, on either side of the holder base 1. Furthermore, the pair of spring means 8 may be replaced by a single spring means 8 held in a through hole 26 provided in the holder base 1 as shown in Figure 1B.

The pair of spring means 8 bias the first heads 9 away from the either side of the holder base 1, whereby the pair of roller members 7 approach each other as the arms 4 rotates about the pins 3. Thus, the pair of roller members 7, attached to the end of the respective arms 4, are driven into the V-shaped groove of the tool holder 15 so as to grip the tool holder 15. In the preferred embodiment shown in Figure 1, the pair of spring means 8 are coil springs. However, the spring means 8 may be replaced by leaf springs, not shown, or by air springs, not shown, which have an equivalent function.

When the tool holder 15 is mounted onto the device, the roller members 7 on the respective arms 4 move away from the other and the tool holder 15 is introduced between the pair of roller members 7. Once the tool holder 15 is forced until the position key 11 is fitted, as shown by the dotted line in Figure 1, the roller members 7 are forced into the V-shaped groove 17 of the tool holder 15 by the springs 8 and the roller members 7 grip the tool holder 15 securely. On the other hand, when the tool holder 15 is released from the device, the pair of roller members 7 moves away from the other, and the gripping portion of the device is opened, whereby the tool holder 15 is released.

The device for gripping a tool holder of the invention allows an operator to easily mount the tool holder to the device manually since the device comprises a pair of rolling elements in its gripping portion and the rolling elements rotate when the tool holder is mounted. On the other hand, setting the spring force of the spring means to the appropriate level, the device of the invention can grip the tool holder by the considerable gripping force generated by the biasing function of the spring means. Thus, the tool is prevented from dropping when the tool is changed by the tool magazine and this increases the reliability of the machining center.

Futhermore the device of the invention can mount and release a tool holder with high level reliability while the friction between the device and the tool holder is reduced by the rotation of rolling element and the wear of the contact potions therebetween is also reduced. Thus, the reliability of tool change at the machining center having the ATC device can be maintained at high level for a long time.

The device for gripping a tool holder of the invention can be produced at low cost since the device has a symmetrical configuration and the number of parts is small.

## Claims

1. A device for detachably gripping a tool holder holding a tool, said device comprising:
a generally flat holder base means;
two arms, each extending at each side of said holder base means in the longitudinal direction along said side of said holder base means and attached for rotation about pivot pins arranged perpendicular to the plane of said holder base means;
a pair of rolling means attached to the leading end of said respective arms for rotation, said rolling means arranged so as to engage with a groove provided in said tool holder and to grip it;
a spring means positioned at the rear portion of said holder base, said spring means biasing said arms so that the leading end of said respective arms approach each other; and
said tool holder being gripped by the leading end of said holder base means and said pair of rolling means.

2. The device in accordance with claim 1 wherein said spring means are clamped between a pair of first heads provided at the rear end of said respective arms and a pair of second heads provided at a rear portions in said holder base means facing said respective first heads.

3. The device in accordance with claim 2 wherein said spring means are a pair of coil springs.

4. The device in accordance with claim 1 wherein said spring means is a single coil spring inserted into a through hole provided at a rear portion of said holder base means, said coil spring biasing the rear end of said each arm away from the other.

5. The device in accordance with claim 1 wherein said pair of rolling means are rollers which are attached to a pair of pins for rotation, said pair of pins being fitted into a pair of bores provided at the leading end of said respective arms.

6. The device in accordance with claim 1 wherein said holder base means is provided an attachment means;
said device being secured to a tool magazine of an automatic tool changer by said attachment means.

7. The device in accordance with claim 6 wherein said attachment means are formed as one piece with said holder base means.
